# EUROPEAN PATENT SPECIFICATION

(11) **EP 4 218 205 B1**
(45) Date of publication and mention of the grant of the patent: **12.06.2024**
(21) Application number: 20780668.8
(22) Date of filing: 24.09.2020
(51) Int. Cl.: H04L 41/044, H04L 41/0806, H04L 41/08, H04L 41/0895, H04L 41/40

(54) **AUTOMATED SETUP OF MULTI-LEVEL, MULTI-DOMAIN NETWORK AUTOMATION FUNCTIONS**
AUTOMATISIERTE EINRICHTUNG VON MEHRSTUFIGEN NETZWERKAUTOMATISIERUNGSFUNKTIONEN MIT MEHREREN DOMÄNEN
CONFIGURATION AUTOMATISÉE DE FONCTIONS D'AUTOMATISATION DE RÉSEAU MULTINIVEAU ET MULTIDOMAINE

(43) Date of publication of application: 02.08.2023
(73) Proprietor: Nokia Solutions and Networks Oy, 02610 Espoo (FI)
(72) Inventor: SANNECK, Henning, 81549 Munich (DE); MWANJE, Stephen, 84405 Dorfen (DE)
(74) Representative: Script IP Limited
(86) International application number: PCT/EP2020/076744
(87) International publication number: WO 2022/063404

(56) References cited:
- US-B2- 9 461 886
- FRENZEL CHRISTOPH ET AL: "Dynamic, context-specific SON management driven by operator objectives", 2014 IEEE NETWORK OPERATIONS AND MANAGEMENT SYMPOSIUM (NOMS), IEEE, 5 May 2014 (2014-05-05), pages 1-8, XP032608930, DOI: 10.1109/NOMS.2014.6838256 [retrieved on 2014-06-17]

## Description

### TECHNI CAL FIELD

At least some example embodiments relate to a cognitive autonomous network (CAN), and in particular to an automated setup of multi-level, multi-domain network automation functions (NAFs) in a network management system of a mobile communications network, such as a 5G network and other (future) generations of wireless/mobile networks.

### BACKGROUND

With the success of Self Organizing Networks (SONs), but also its shortcom ings in terms of flexibility and adaptability to changing and complex environments, there is a strong demand for more intelligence and autonomy in network Operations, Administration and Management (OAM).

An objective of CAN is that Network Automation Functions (NAFs) should be able to: 1) take higher level goals and derive the appropriate performance targets, 2) learn from their environment and their individual or shared experiences therein, 3) learn to contextualize their operating conditions and, 4) learn their optimal behavior fitting to the specific environment and contexts. This learning shall be based on all kinds of data available in the network (including, for example, performance information, failures, configuration data, network planning data, or user and service-related data) as well as from the actions and the corresponding impact of the OAM function itself. The learning and the knowledge built from the learned information shall thereby increase the autonomy of the OAM functions.

Current and future networks will for a long-time support both learning based Cognitive Functions (CFs) and rule-based SON Functions (SFs). Different combinations of both kinds of functions, together called generically Network Automation Functions (NAFs), may coexist in the network at the same time, with each NAF tasked to achieve its specific objective.

### CITATION LIST

[ZSM-009-1_Cla enab] ZSM; Closed-loop automation; Enablers, ETSI ISG ZSM
[ZSM-009-2_Cla_sol] ZSM; Closed-loop automation; Solutions, ETSI ISG ZSM
[MARO] SA5 Multi-Aspect / multi-domain Resource Optimization use case in 28.861 (study SON in 5G), section 5.21
[3GPP-TS 28.628] SON Policy NRM, V15.1.0, March 2019
[3GPP-TS 28.533] Management and orchestration; Architecture framework, V16.4.0, June 2020
[MDAS] Management Data Analytics Service (3GPP SA5 study), TR28.809

### LIST OF ABBREVIATIONS

- 3GPP: Third Generation Partnership Project
- 5G: Fifth Generation
- API: Application Programming Interface
- CAN: Cognitive Autonomous Network
- CF: Cognitive Function
- CLA: Closed Loop Automation
- ETSI: European Telecommunications Standards Institute
- KPI: Key Performance Indicator
- MARO: Multi-Aspect Resource Optimization
- MD: Management Domain
- ML: Machine Learning
- NAF: Network Automation Function
- NAF-SeF: NAF-Setup Function
- NFMF: Network Function Management Function
- NRM: Network Resource Model
- NSSMF: Network Slice Subnet Management Function
- NSMF: Network Slice Management Function
- NWDAF: NetWork Data Analytics Function
- OAM: Operations, Administration and Management
- PNF: Physical Network Function
- RAN: Radio Access Network
- SA: System Aspects
- SBMA: Service-Based Management Architecture
- SF: SON Function
- SON: Self-Organizing Network
- VNF: Virtual Network function
- ZSM: Zero-Touch network and Service Management (ETSI)

FRENZEL CHRISTOPH ET AL: "Dynamic, context-specific SON management driven by operator objectives", 2014 IEEE NETWORK OPERATIONS AND MANAGEMENT SYMPOSIUM (NOMS), IEEE, 5 May 2014 (2014-05-05), pages 1-8) discloses techniques for the management and operation of a self-organizing network-enabled mobile network. A series of high-level models are provided which at design time provide a SON Function Configuration Parameter value (SCV) policy which defines for each SON Function an SVC set which steers the SON Function to fulfil the technical objectives under a specific context. US 9 461 886 B2 discloses a set of reporting features for implementation by lower level SON Functions to support the observation of network SON algorithms by high level SON Functions. In particular, problems detected by lower level SON Function are reported to a higher level SON Function to resolve conflicts between those lower level SON Functions. In particular, the higher level SON Functions may be centralized and occur in the core network.

### SUMMARY

According to an aspect, there is provided a method as claimed in claim 1, a non-transitory computer-readable storage as claimed in claim 2 and an apparatus as claimed in claim 3.

In the following example embodiments will be described with reference to the accompanying drawings.

### BRIEF DESCRIPTION OF THE DRAWl NGS

Fig. 1 shows a schematic diagram illustrating Network Automation Function (NAF) interfaces across Management Domains (MDs).
Fig. 2 shows a schematic diagram illustrating NAFs in multi-level management domains.
Fig. 3 shows a schematic diagram illustrating instantiation of a new NAF in a multi-level management system.
Fig. 4 shows a schematic diagram illustrating MARO.
Fig. 5 shows a schematic diagram illustrating hierarchical relationships of loops in ZSM.
Fig. 6 shows a schematic diagram illustrating an NAF Setup Function (NAF-SeF) in a multi-level, multi-domain management architecture according to at least some example embodiments.
Fig. 7 shows a flowchart illustrating a process of a setup function according to at least some example embodiments.
Fig. 8 shows a signaling diagram illustrating signaling between NAFs and NAF-SeF according to at least some example embodiments.
Fig. 9 shows a schematic diagram illustrating a first application example in which an NAF-SeF according to at least some example embodiments is applied to network slicing management in 3GPP SA5.
Fig. 10 shows a schematic diagram illustrating a second application example in which an NAF-SeF according to at least some example embodiments is applied to network management automation in ETSI ZSM.
Fig. 11 shows a schematic block diagram illustrating a configuration of a control unit in which example embodiments are implementable.

### DESCRIPTION OF THE EMBODIMENTS

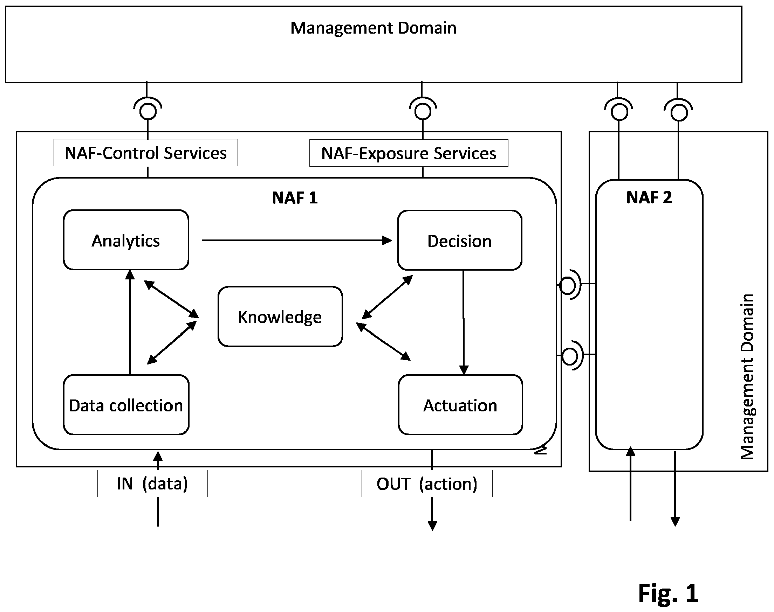

Fig. 1 shows a schematic diagram illustrating Network Automation Function (NAF) interfaces across Management Domains (MDs).

In Fig. 1, NAF 1 and NAF 2 are shown on the same management domain of a network management system (network management system architecture) of a cognitive autonomous network in a mobile communications network, such as a 5G network and other (future) generations of wireless/mobile networks.

As an example, Fig. 1 shows internals of NAF 1 with NAF "stages": Data collection, Analytics, Decision, Actuation and a Knowledge Repository; note that not all of the building blocks have to be present for every NAF.

Furthermore, external interfaces of NAF 1 and NAF 2 are shown in Fig. 1, which comprise external interfaces for (closed-loop) runtime operations:
- to receive run-time inputs (IN), e.g., performance data; and/or
- to send run-time outputs (OUT), e.g., network reconfiguration actions.

Further, the external interfaces of NAF 1 and NAF 2 comprise external interfaces for management (at both design- and run-time):
- to receive management and control inputs via NAF-Control Services, e.g., target setting for the NAF; and
- to send management outputs via NAF-Exposure Services, e.g., performance information on if /how a set target is achieved.

Each NAF is associated with a "management domain" containing one or multiple NAF functions. As depicted in Fig. 1, for example, management domains have:
i) "peer-to-peer" relationships which are "horizontal" interfaces to support multi-domain interactions, or
ii) "hierarchical" relationships which are "vertical" interfaces to support multi-level, multi-domain interactions.

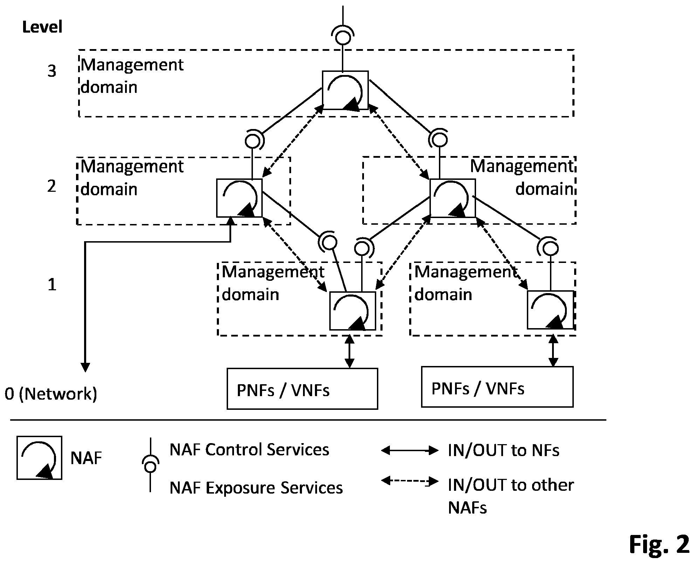

For example, a "hierarchical" setup of multiple management domains contains two or more "levels" in the management domain hierarchy. This is shown in Fig. 2, introducing level 1 as the lowest level where NAFs appear and level 0 being the level of actual physical or virtual network resources.

A NAF at any level has the introduced interfaces IN and/or OUT, NAF control, and NAF exposure. As output via OUT, Level 1 NAFs directly manipulate network configuration parameters of the (level 0) physical and virtual NFs, i.e., Level 1 NAFs do not manage other lower level NAFs via the "NAF control" interface, as shown in Fig. 2.

On the other hand, a critical task of NAFs at level L (with L >=2) is to manage NAFs in other management domains on level L-1. Referring to Fig. 2, for example, such NAFs on e.g., level L=2 also provide inputs/outputs (IN/OUT) to NAFs on level L-1 AND/OR to physical /virtual network functions on level 0. For example, to configure network automation targets, an NAF at level 2 (also referred to as L2 NAF) provides, via a control interface of an NAF at level 1 (also referred to as L1 NAF), specific KPI target values to be achieved by the L1 NAF, and the L2 NAF provides, via its OUT interface, e.g., configuration management and aggregated KPI information which assist the L1 NAF on how to achieve the given target.

The configuration and set of these different functions at the different levels with the appropriate data required for their operation is a complex endeavor which requires to be automated in order to guarantee efficient network operations.

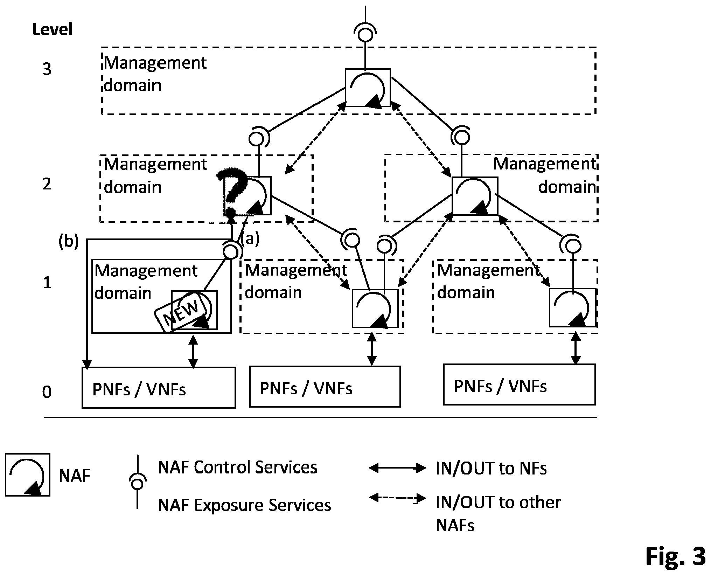

When an NAF at level L-1 (L>=2) appears, e.g., when a new domain is instantiated as illustrated in Fig. 3, an NAF at level L does not have operational knowledge to manage the NAF on level L-1.

Managing the NAF implies setting inputs, controls and outputs of the NAF that need to be specified for the NAF to operate as desired. For instance, taking the SON policy NRM [3GPP-TS 28.628] as an example, managing the NAF refers to setting, e.g.,
- Targets (note that targets can be expressed both (concurrently or alternatingly) in a declarative (what the outcome should be) and imperative (how the outcome should be achieved) form;
- Notification conditions / thresholds;
- (Spatial and temporal) "scope" (i.e., on which resources over which time period the NAF is actually operating); and/or
- Specific subset of inputs and outputs.

Note that the parameters above all are dependent on both the specific NAF type or purpose and the operational or deployment context.

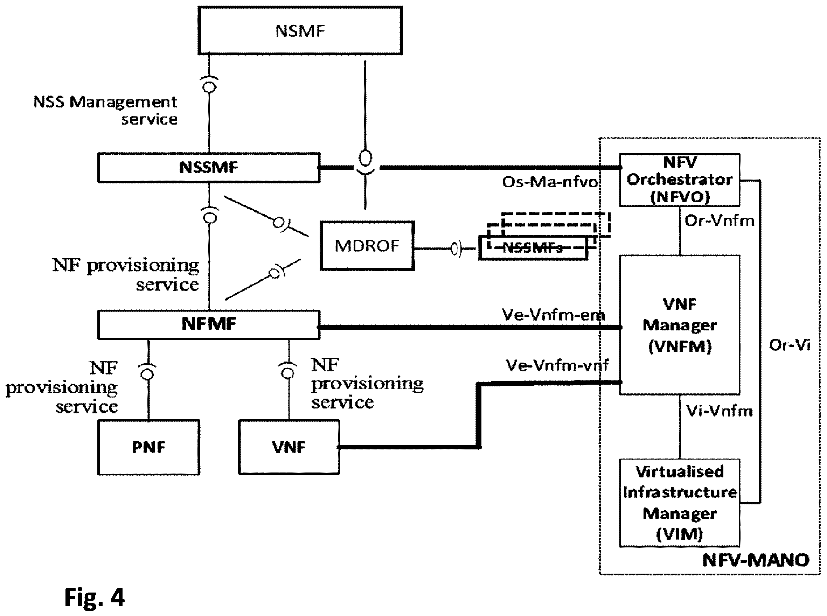

There is a Multi-Aspect Resource Optimization (MARO) function [MARO] as shown in Fig. 4, which is used (in a closed-loop way) to set and improve multi-level policies (e.g., target setting) for network slicing management, e.g. with the following mapping:
- level 3: Network Slice Management Function (NSMF),
- level 2: Network Slice Subnet Management Function (NSSMF),
- level 1: Network Function Management Function (NFMF).

The corresponding "domains" here are typically RAN, edge cloud, core and transport management at level 2, and "end-to-end (e2e)" slicing management at level 3.

As an example, a target setting on an NAF control interface is done as follows:
- set a default target ("best effort") via interface (a) shown in Fig. 3,
- collect, for a time period T, relevant information from lower levels, e.g., L-1 on NAF performance via the interface (a) and L-2 on network performance: PM, FM, CM and other data via interface (b) shown in Fig. 3,
- only thereafter, e.g., an operational context-specific target for that NAF can be computed.

Hence it can be summarized that MARO [MARO] is concerned with the operational phase. In contrast, according to at least some example embodiments to be described in the following a setup or "bootstrapping" applicable, e.g., to MARO, is explicitly addressed with a new automated method.

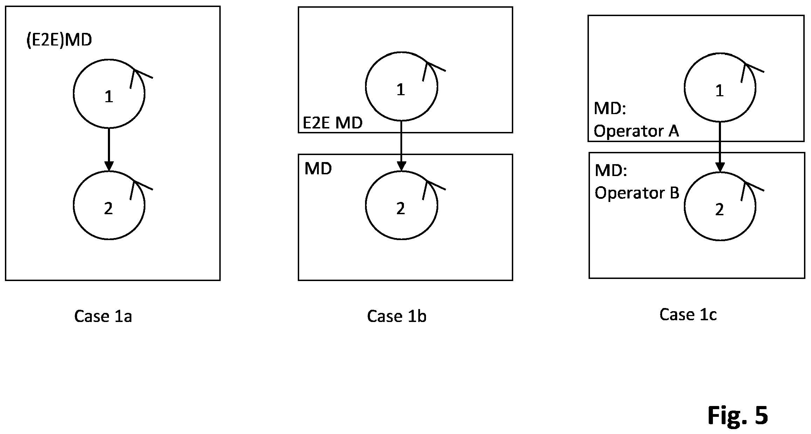

As a further example, Fig. 5 illustrates hierarchical relationships of loops in ETSI ZSM. Cases 1a, 1b and 1c are shown, in which in Case 1a loops 1 and 2 both are included in an e2e management domain. In Case 1b, loop 1 is included in the e2e management domain, and loop 2 is included in a management domain e.g. of the same operator. In Case 1c, loop 1 is included in a management domain of operator A, and loop 2 is included in a management domain of operator B. An interface between loop 1 and loop 2 is indicated by an arrow between the loops.

In ETSI ZSM, multi-domain and multi-level scenarios are considered, however, so far only the run-time operation but not the automated, dynamic setup has been addressed.

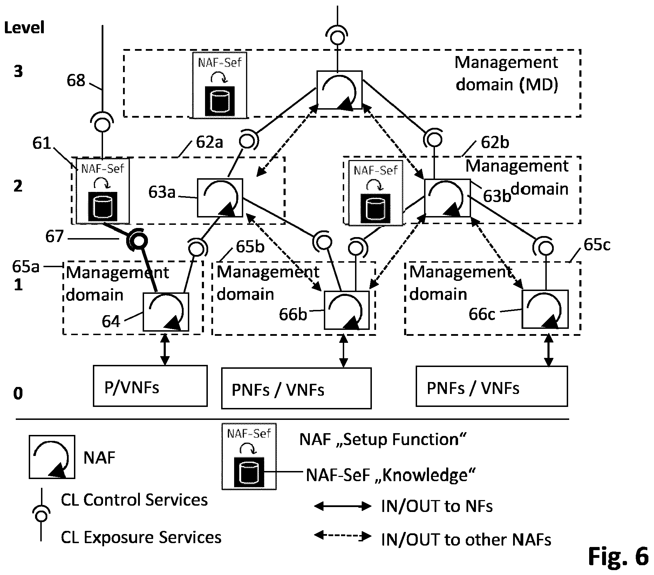

According to at least some example embodiments, an "NAF Setup Function" (NAF-SeF) is proposed, e.g. as illustrated in Fig. 6, to address the above-described operational setup (or "management bootstrapping") problem.

As shown in Fig. 6, an NAF-SeF is specific for each level L (L>=2) in each management domain of the architecture illustrated in Fig. 2. For example, the NAF-SeF has the configuration of NAF 1 shown in Fig. 1, and its Knowledge part on level L is a knowledge repository that stores descriptions and operational profiles of existing NAFs as well as Management Domain (MD) knowledge for levels L and L-1. The NAF-SeF determines a new NAF's operational profile by evaluating the new NAF's description against the applicable knowledge in the repository.

According to at least some example embodiments, the evaluation is based on the following inputs (1) to (3) to the NAF-SeF:
(1) Description of the new NAF, e.g. self-description or pre-configured, NAF type-dependent. For example, the description comprises at least one out of the following:
   - a qualitative target of the new NAF, e.g., which metric is to be optimized by the new NAF,
   - a full set of possible inputs and/or outputs of the new NAF,
   - one or more algorithms of the new NAF, e.g., rulesets and/or ML algorithms,
   - a scope of the new NAF, e.g., a type of network resources (e.g., a set of cells or a slice subnet) which are manipulated by the new NAF;
(2) MD knowledge on levels L and L-1), such as network traffic conditions, alarms, etc.
(3) Operational profiles of existing NAFs on level L-1, which are NAF instance and operational context dependent. For example, the operational profiles comprise at least one out of the following:
   - a quantitative target of the existing NAF,
   - actual available / required input data sources and network parameters of the existing NAF,
   - an actual algorithm / configuration of the actual algorithm of the existing NAF, and
   - an operational scope of the existing NAF, e.g., instances of network resources (e.g., set of cell IDs) in a specific management domain of the existing NAF.

According to at least some example embodiments, the output of the NAF-SeF is an operational profile of the new NAF.

Figure 6 shows NAF-SeF 61 on level L=2 as an example of an NAF-SeF according to at least some example embodiments. NAF-SeF 61 is associated with management domain 62a. Management domain 62a and management domain 62b are associated with level L=2 of the management domain hierarchy. In the example of Fig. 6, management domain 62a comprises NAF-SeF 61 and an (existing) NAF 63a. The management domain 62a is not limited to comprising only one NAF 63a and may comprise two or more NAFs.

The management domain 62b comprises an NAF-SeF and an (existing) NAF 63b. The management domain 62b is not limited to comprising only one NAF 63b and may comprise two or more NAFs.

A new NAF 64 is to be set up in a management domain 65a associated with level L-1 of the management domain hierarchy. Also management domain 65b and management domain 65c are associated with level L-1. In the example of Fig. 6, management domain 65a comprises the new NAF 64 to be set up. However, the management domain 65a is not limited to comprising only the new NAF 64, and may further comprise one or more (existing) NAFs.

Management domain 65b comprises an (existing) NAF 66b, and management domain 65c comprises an (existing) NAF 66c. However, management domains 65b and 65c are not limited thereto and may comprise two or more NAFs.

According to at least some example embodiments, a control and exposure interface 67 is used to acquire the self-description from the new NAF 64 (i.e. input (1)) and to apply the output operational profile to the new NAF 64.

For input (2), according to at least some example embodiments, the NAF-SeF 61 uses any available interface to access operational knowledge, e.g., control and exposure interfaces (not shown in Fig. 6) of the NAF-SeF 61 to one or more level L NAFs 63a, 63b, including a level L NAF responsible for the operational configuration of the L-1 NAF. In the example of Fig. 6, NAF 63a is responsible for the operational configuration of NAF 66b, and NAF 63b is responsible for the operational configuration of NAFs 66b and 66c.

For input (3), according to at least some example embodiments, control and exposure interfaces (not shown in Fig. 6) of the NAF-SeF 61 to other L-1 NAFs (NAFs 66b, 66c in Fig. 6) are used.

It is noted again that interfaces for inputs (2) and (3) are not shown in Fig. 6 for reasons of clarity.

According to at least some example embodiments, operator policies, governing the behavior of NAF-SeF 61, are configured through a control and exposure interface 68 of the NAF-SeF 61.

Here, in this specification,
- the NAF-SeF is referred to also as setup function,
- the descriptions and operational profiles of existing NAFs are referred to also as first information,
- the management domain knowledge is referred to also as second information,
- existing NAFs on level L-1 is referred to also as first NAFs,
- existing NAFs on level L are referred to also as second NAFs,
- management domains associated with level L-1 are referred to also as first management domains,
- management domains associated with level L are referred to also as second management domains,
- the new NAF is referred to also as third NAF,
- the description of the new NAF is referred to also as third information,
- the control and exposure interface 67 is referred to also as first control and exposure interface,
- interfaces between the NAF-SeF 61 and management domains 62a, 62b, 65a, 65b, 65c are referred to also as second interfaces,
- control and exposure interfaces between the NAF-SeF 61 and NAFs 66b, 66c are referred to also as third control and exposure interfaces, and
- interface 68 is referred to also as fourth control and exposure interface.

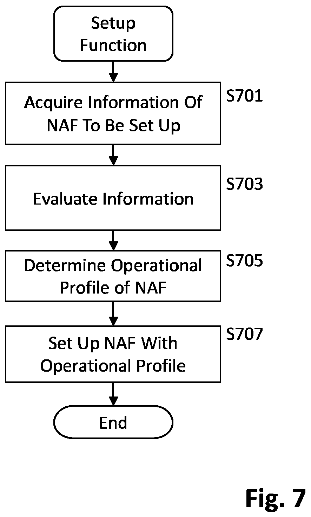

Now reference is made to Fig. 7 which shows a flowchart illustrating a method of implementing a setup function according to at least some example embodiments.

For example, it is assumed that the setup function is associated with a management domain of a network management system (network management system architecture) of a mobile communications network. The management domain comprises one or more network automation functions (NAFs), and the management domain is associated with a specific level of a management domain hierarchy of the network management system architecture. In the example of Fig. 6, the setup function is NAF-SeF 61, and its management domain is management domain 62a of the second management domains 62a, 62b.

It is further assumed that the setup function stores first information indicating descriptions and operational profiles of one or more first network automation functions of one or more first management domains of the network management system. The first management domains are associated with a level L-1 of the management domain hierarchy. In the example of Fig. 6, the one or more first network automation functions are NAFs 66b and 66c, the one or more first management domains are MDs 65a, 65b and 65c, and level L-1 is Level 1.

It is further assumed that the setup function further stores second information indicating management domain knowledge about one or more second management domains of the network management system architecture and about the one or more first management domains. The second management domains are associated with a level L of the management domain hierarchy. In the example of Fig. 6, the one or more second management domains are MDs 62a and 62b, and level L is Level 2.

In step S701, information (third information) is acquired, which indicates a description of an NAF (third network automation function) which is to be set up in a management domain of the first management domains associated with the level L-1. In the example of Fig. 6, the third NAF is NAF 64, and the management domain is management domain 65a. Then the process proceeds to step S703.

In step S703, an evaluation of the third information against at least one of the first information and the second information is performed. Then the process proceeds to step S705.

In step S705, an operational profile of the third network automation function is determined based on the evaluation. Then the process proceeds to step S707.

In step S707, the third network automation function is set up in the management domain associated with the level L-1 by applying the operational profile to the third network automation function. Then the process of Fig. 7 ends.

According to at least some example embodiments, L is a positive integer equal to or greater than 2.

According to at least some example embodiments, the process shown in Fig. 7 is executed each time a new NAF is to be set up.

According to at least some example embodiments, the management domain which the setup function is associated with is one of the second management domains associated with the level L. In the example of Fig. 6, NAF-SeF 61 is associated with MD 62a of Level 2.

According to at least some example embodiments, the management domain which the setup function is associated with and the management domain which the third network automation function is associated with are similar management domains. Here, "similar" means that e.g. MD 62a and MD 65a are associated with the same or similar part of the mobile communications network, e.g. radio access network or core network, which will be described in application examples later on.

At least some example embodiments are applicable to multi-domain scenarios which e.g. comply with Service-Based Management Architecture (SBMA) principles, i.e. without hierarchy, where only service providers and consumers exists. In particular, if there is a 'conceptual' (rather than implementation) hierarchy of management domains, i.e., an NAF (master) sets the operational targets for other NAFs (slaves), the at least some example embodiments allow to take advantage of the accumulated knowledge at the NAF (master).

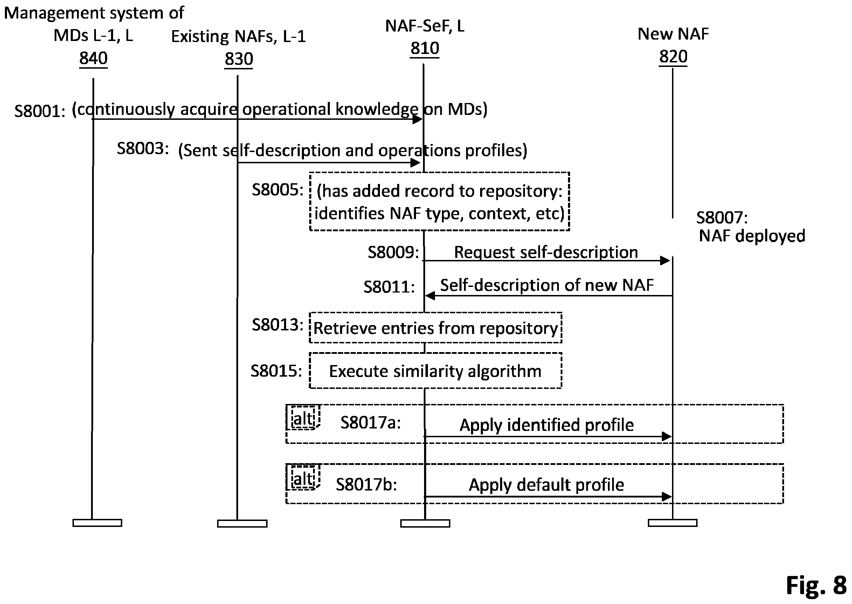

In the following, a method according to least some example embodiments will be described with reference to Fig. 8.

Fig. 8 shows a signaling diagram illustrating interaction between different components of a network management system of a mobile communications network. In particular, Fig. 8 illustrates interaction, e.g. via interface 67 shown in Fig. 6, between NAF-SeF 810 on level L (e.g. NAF-SeF 61 in the example of Fig. 6) and a new NAF 820 on level L-1 (e.g. NAF 64 in the example of Fig. 6), existing NAFs 830 on level L-1 (e.g. NAFs 66b, 66c in the example of Fig. 6), and network management system of MDs L-1, L 840 (e.g. MDs 62a, 62b, 65a, 65b, 65c in the example of Fig. 6).

Step S8001 illustrates continuous acquisition of operational knowledge on MDs 840 by NAF-SeF 810.

Step S8003 illustrates the existing NAFs 830 sending their self-description and operational profiles to NAF-SeF 810.

Step S8005 illustrates that NAF-SeF 810 stores the information sent from MDs 840 and existing NAFs 830 as record to its knowledge repository. For example, the NAF-SeF 810 identifies NAF type, context, etc. from this information.

When new NAF 820 at level L-1 appears in step S8007, NAF-SeF 810 at level L requests (S8009) and the new NAF 820 provides (S8011) its self-description.

The NAF-SeF 810 for level L checks the self-description of the new NAF 820 versus entries in the knowledge repository for level L-1 NAFs 830 considering knowledge about the MDs 840 (S8013).

For the found, related entries in the knowledge repository, in step S8015 a specific algorithm (beyond the scope of this application) determines "similarity" of the new NAF 820 with existing NAFs 830, e.g., in a statistical sense or using transfer learning, and returns an operational profile or an indication that no such profile could be found. For example, the returned profile is a "best matching" existing profile, a specifically computed new profile or a combination of those variants.

The identified profile is configured via the control service (e.g. interface 67 according to the example of Fig. 6) to the new NAF 820.

For example, in step S8017a, the applied operational profile is the operational profile of the new NAF 820 found by the "similarity algorithm".

In case no such profile could be found, in step S8017b a default profile is applied to the new NAF 820.

The "similarity algorithm" is not specifically restricted. For example, the "similarity algorithm" is governed by operator policies, related to both:
- Human-level operational knowledge, e.g., critical parameters are specified which have to be identical, parameters are specified which are a priori excluded due to known differences between the MDs, etc.; and
- Human-level (high level) operational targets.

After completion of the described method of Fig. 8, the new NAF 820 on level L-1 is configured with an operational profile based on the operational knowledge available, and thus ready to operate.

An NAF on level L (e.g. NAF 63a in the example of Fig. 6) supposed to do continuous management on the new NAF 820 (NAF 64 in Fig. 6) on level L-1 can then directly start with actions via its control services interface to the new NAF 820 (NAF 64) on level L-1. For example, the NAF 63a on level L also retrieves via its exposure services interface the initial operational profile configured by the NAF-SeF 810 (NAF-SeF 61). Alternatively, the NAF 63a on level L directly retrieves the initial operational profile via the exposure service (e.g. exposure and control interface between NAF-SeF 61 and NAF 63a, not shown in Fig. 6) of the NAF-SeF 810 (NAF-SeF 61).

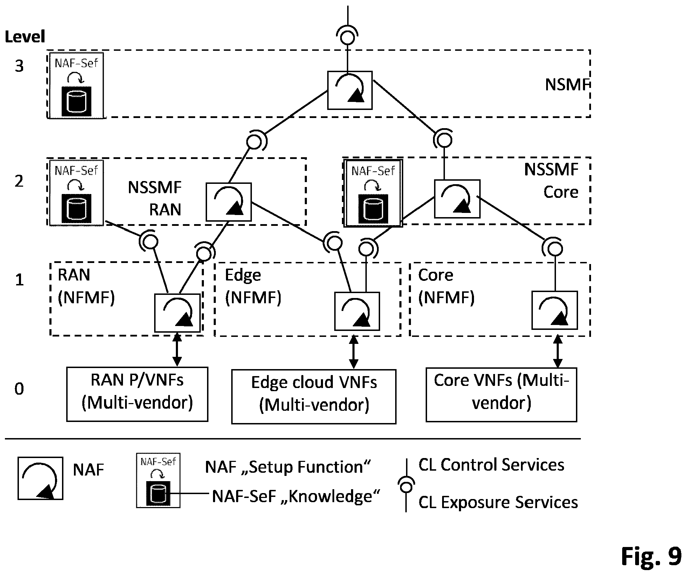

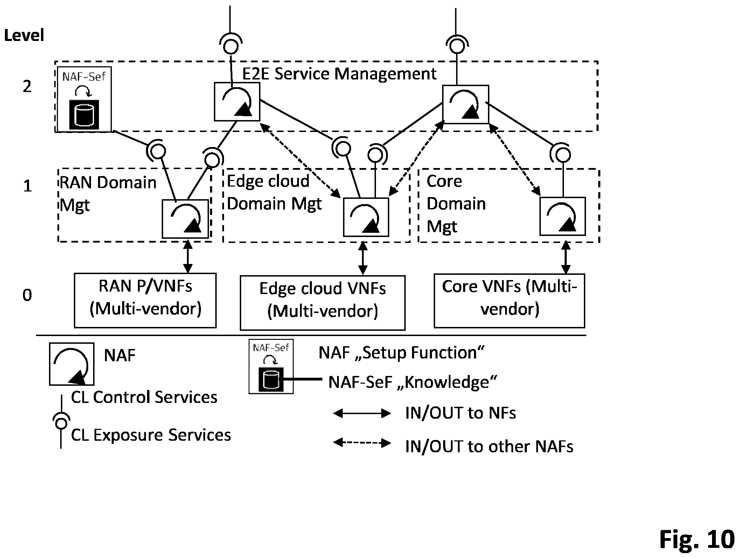

In the following, two application examples mapping at least some example embodiments into specific SDO-defined network management architectures will be described with reference to Figs. 9 and 10.

### Application example 1: 3GPP SA5 network slicing

Fig. 9 shows the mapping of at least some example embodiments to the network slicing framework defined in 3GPP SA5 [3GPP-TS 28.533], using service-based management architecture (SBMA) principles.

As shown in Fig. 9, NFMFs are Level 1 NAFs, and NSSMFs are Level 2 NAFs. Besides, NSMF is Level 3 NAF, and PNFs and VNFs are network function on Level 0. On Level 3, there is one management domain, on Level 2 there are two management domains for RAN and Core, respectively, and on Level 1 there are three management domains for RAN, Edge and Core, respectively.

The NFMFs are managed, via control and exposure services (also referred to as control and exposure interfaces) as illustrated e.g. in Fig. 6, by NAF-SeFs on Level 2 per the respective MD like RAN, Edge, Core.

The NSSMFs are managed by NAF-SeF on Level 3.

The NAF-SeFs (i) consume the exposure services to learn operational profiles of existing NAFs, (ii) obtain the self-description of a new NAF, and (iii) consume the control services to apply the determined profile for a new NAF. NAF-SeFs on Level 2 perform operations (i)-(iii) for Level 1 NFMFs, e.g., SON functions, and the NAF-SeF on Level 3 perform operations (i)-(iii) for Level 2 NSSMFs.

MARO [MARO] is a specific NAF combining the described Level 2 / Level 3 functionality for a joint optimization across multiple MDs and across multiple levels.

When matching application example 1 shown in Fig. 9 to the example of Fig. 6, NAF-SeF of Level 2 MD RAN corresponds to NAF-SeF 61, Level 2 MD RAN corresponds to MD 62a, NSSMF of MD RAN corresponds to NAF 63a, NFMF to be set up in Level 1 MD RAN corresponds to NAF 64, Level 1 MD RAN corresponds to MD 65a, and the control and exposure interface between Level 2 MD RAN NAF-SeF and Level 1 MD RAN NFMF corresponds to interface 67.

### Application example 2: ETSI ZSM CLA

Fig. 10 shows the mapping of at least some example embodiments to ETSI ZSM Closed Loop Automation (CLA).

ZSM also follows SBMA principles, similar to the SA5 application example 1.

NAFs are closed loops (CLs) in any of the management domains. It is noted that at least some example embodiments are independent from which internal parts (called "stages" in ZSM terminology) are present in the NAF (i.e. CL).

As shown in Fig. 10, Level 0 network functions associated with RAN, Edge Cloud and Core are managed by NAFs (CLs) of Level 1 MDs "RAN", "Edge Cloud" and "Core".

The Level 1 NAFs (CLs) are managed by NAFs (CLs) of Level 2 MD associated with E2E service management.

When matching application example 2 shown in Fig. 10 to the example of Fig. 6, NAF-SeF of Level 2 corresponds to NAF-SeF 61, Level 2 MD E2E service management corresponds to MD 62a, Level 2 NAF (CL) on the left hand side in Fig. 10 corresponds to NAF 63a, NAF (CL) to be set up in Level 1 MD RAN corresponds to NAF 64, Level 1 MD RAN corresponds to MD 65a, and the control and exposure interface between Level 2 NAF-SeF and Level 1 MD RAN NAF (CL) corresponds to interface 67.

ZSM [ZSM-009-1_Cla enab] defines "commissioning" and "operation" phases within a Closed Loop lifecycle to which at least some example embodiments apply. The NAF-SeF of Fig. 10 uses knowledge gained from the "operation" phase from other CLs on Levels 1 and 2, and applies it to the "commissioning" phase of Level 1 MD RAN CL.

For example, NAFs' "self-description" is derived from data used for instantiation of the closed loop, e.g., in form of a "CL descriptor" that is compiled at design time to be used to instantiate the CL.

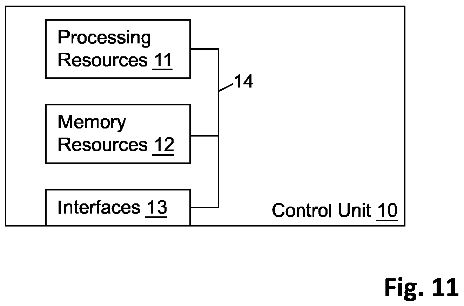

Now reference is made to Fig. 11 illustrating a simplified block diagram of a control unit 10 that is suitable for use in practicing at least some example embodiments. According to an implementation example, the method of Fig. 7 is implemented by the control unit 10.

The control unit 10 comprises processing resources (e.g. processing circuitry) 11, memory resources (e.g. memory circuitry) 12 and interfaces (e.g. interface circuitry) 13, which are coupled via a wired or wireless connection 14.

According to an example implementation, the memory resources 12 are of any type suitable to the local technical environment and are implemented using any suitable data storage technology, such as semiconductor based memory devices, magnetic memory devices and systems, optical memory devices and systems, fixed memory and removable memory. The processing resources 11 are of any type suitable to the local technical environment, and include one or more of general purpose computers, special purpose computers, microprocessors, digital signal processors (DSPs) and processors based on a multi core processor architecture, as non limiting examples.

According to an implementation example, the memory resources 12 comprise one or more non-transitory computer-readable storage media which store one or more programs that when executed by the processing resources 11 cause the control unit 10 to function as an NAF-SeF (e.g. NAF-SeF 61, NAF-SeF 810) as described above.

Further, as used in this application, the term "circuitry" refers to one or more or all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

According to at least some example embodiments, the apparatus is implemented by the control unit 10 of Fig. 11.

## Claims

1. A method of implementing a setup function (61) for network automation functions, wherein the setup function is associated with a management domain (62a) of a network management system of a mobile communications network, wherein the management domain comprises one or more network automation functions (63a), and wherein the management domain is associated with a specific level of a management domain hierarchy of the network management system, the method comprising:
storing first information indicating descriptions and operational profiles of one or more first network automation functions (66b) of one or more first management domains (65b) of the network management system, wherein the first management domains are associated with a level L-1 of the management domain hierarchy;
storing second information indicating management domain knowledge about one or more second management domains (62a) of the network management system, wherein the second management domains are associated with a level L of the management domain hierarchy higher than level L-1, and about the one or more first management domains;
acquiring (S701) third information indicating a description of a third network automation function (64) which is to be set up in a management domain (65a) of the first management domains associated with the level L-1;
performing (S703) an evaluation of the third information against at least one of the first information and the second information;
determining (S705) an operational profile of the third network automation function based on the evaluation; and
setting up (S707) the third network automation function in the first management domain associated with the level L-1 by applying the operational profile to the third network automation function, wherein the management domain which the setup function is associated with is one of the second management domains associated with the level L, and wherein the method is performed by the setup function for network automation functions associated with the second management domain.

2. A non-transitory computer-readable storage medium storing a program that, when executed by a computer, causes the computer to perform a method of implementing a setup function (61) for network automation functions, wherein the setup function is associated with a management domain (62a) of a network management system of a mobile communications network, wherein the management domain comprises one or more network automation functions (63a), and wherein the management domain is associated with a specific level of a management domain hierarchy of the network management system, the method comprising:
storing first information indicating descriptions and operational profiles of one or more first network automation functions (66b) of one or more first management domains (65b) of the network management system, wherein the first management domains are associated with a level L-1 of the management domain hierarchy;
storing second information indicating management domain knowledge about one or more second management domains (62a) of the network management system, wherein the second management domains are associated with a level L of the management domain hierarchy higher than level L-1, and about the one or more first management domains;
acquiring (S701) third information indicating a description of a third network automation function (64) which is to be set up in a management domain (65a) of the first management domains associated with the level L-1;
performing (S703) an evaluation of the third information against at least one of the first information and the second information;
determining (S705) an operational profile of the third network automation function based on the evaluation; and
setting up (S707) the third network automation function in the first management domain associated with the level L-1 by applying the operational profile to the third network automation function, wherein the management domain which the setup function is associated with is one of the second management domains associated with the level L, and wherein the method is performed by the setup function for network automation functions associated with the second management domain.

3. An apparatus for implementing a setup function (61) for network automation functions, wherein the setup function is associated with a management domain (62a) of a network management system of a mobile communications network, wherein the management domain comprises one or more network automation functions (63a), and wherein the management domain is associated with a specific level of a management domain hierarchy of the network management system, the apparatus comprising at least one processor and at least one memory including computer program code, the at least one memory and the computer program code configured to, with the at least one processor, cause the apparatus at least to perform:
storing first information indicating descriptions and operational profiles of one or more first network automation functions (66b) of one or more first management domains (65b) of the network management system, wherein the first management domains are associated with a level L-1 of the management domain hierarchy;
storing second information indicating management domain knowledge about one or more second management domains (62a) of the network management system, wherein the second management domains are associated with a level L of the management domain hierarchy higher than level L-1, and about the one or more first management domains;
acquiring third information indicating a description of a third network automation function (64) which is to be set up in a management domain (65a) of the first management domains associated with the level L-1;
performing an evaluation of the third information against at least one of the first information and the second information;
determining an operational profile of the third network automation function based on the evaluation; and
setting up the third network automation function in the first management domain associated with the level L-1 by applying the operational profile to the third network automation function, wherein the management domain which the setup function is associated with is one of the second management domains associated with the level L, and wherein the method is performed by the setup function for network automation functions associated with the second management domain.

4. The apparatus of claim 3, wherein the descriptions of the one or more first network automation functions and the description of the third network automation function comprise at least one out of the following:
a qualitative target of the first network automation functions;
a qualitative target of the third network automation function;
an indication which metric is to be optimized by the first network automation functions;
an indication which metric is to be optimized by the third network automation function;
a set of possible inputs of the first network automation functions;
a set of possible inputs of the third network automation function;
a set of possible outputs of the first network automation functions;
a set of possible outputs of the third network automation function;
one or more algorithms of the first network automation functions;
one or more algorithms of the third network automation function;
rulesets of the algorithms;
one or more machine learning algorithms of the algorithms;
a type of network resources which are manipulated by the first network automation functions; and
a type of network resources which are manipulated by the third network automation function,
wherein the type comprises at least one of a set of cells of the mobile communications network or a slice subnet of the mobile communications network.

5. The apparatus of any one of claims 3 to 4, wherein the second information comprises at least one of network traffic conditions and alarms.

6. The apparatus of any one of claims 3 to 5, wherein the operational profiles of the first network automation functions comprise at least one out of the following:
a quantitative target of the first network automation functions;
actual available input data sources and network parameters;
actual required input data sources and network parameters;
one or more actual algorithms of the first network automation functions;
a configuration of the actual algorithms;
an operational scope of the first network automation functions;
instances of network resources in a specific management domain of the first management domains; and
a set of cell identifiers in a specific management domain of the first management domains.

7. The apparatus of any one of claims 3 to 6, wherein the at least one memory and the computer program code are configured to, with the at least one processor, cause the apparatus to further perform:
acquiring the third information via a first control and exposure interface between the setup function and the third network automation function.

8. The apparatus of any one of claims 3 to 7, wherein the at least one memory and the computer program code are configured to, with the at least one processor, cause the apparatus to further perform:
applying the operational profile to the third network automation function via a first control and exposure interface between the setup function and the third network automation function.

9. The apparatus of any one of claims 3 to 8, wherein the at least one memory and the computer program code are configured to, with the at least one processor, cause the apparatus to further perform:
acquiring the second information via at least one second interface between the setup function and one or more of the first and second management domains; and
acquiring the first information via at least one third control and exposure interface between the setup function and the first network automation functions.

10. The apparatus of claim 9, wherein
the at least one second interface comprises at least one second control and exposure interface between the setup function and one or more second network automation functions associated with the second management domains, and
the second network automation functions include at least one second network automation function that is responsible for an operational configuration of at least one of the first network automation functions.

11. The apparatus of any one of claims 3 to 10, wherein the at least one memory and the computer program code are configured to, with the at least one processor, cause the apparatus to further perform:
receiving an operator input for controlling the setup function via a fourth control and exposure interface of the setup function.

12. The apparatus of any one of claims 3 to 11, wherein the at least one memory and the computer program code are configured to, with the at least one processor, cause the apparatus to further perform:
providing at least one of second network automation functions of the second management domains, that is responsible for an operational configuration of the third network automation function with the operational profile.

13. The apparatus of any one of claims 3 to 12, wherein at least one of the following applies:
the first and second management domains correspond to a service-based management architecture;
the first network automation functions and the third network automation function represent network function management functions, and second network automation functions of the second management domains represent network slice subnet management functions;
the first network automation functions and the third network automation function represent network slice subnet management functions, and a second network automation function of the second management domain represents a network slice management function;
the setup function is associated with a second management domain of the second management domains, which is associated with a radio access network of the mobile communications network, and the third network automation function is to be set up in a first management domain of the first management domains, which is associated with the radio access network;
the setup function is associated with a second management domain of the second management domains, which is associated with a core network of the mobile communications network, and the third network automation function is to be set up in a first management domain of the first management domains, which is associated with the core network;
the first, second and third network automation functions represent closed loops;
the second information is derived from an operation phase of the first and second network automation functions;
the descriptions of the one or more first network automation functions and the description of the third network automation function are derived from a descriptor used for instantiation of the closed loops; and
the operational profile is applied to a commissioning phase of the third network automation function.

## Patentansprüche

1. Verfahren zum Implementieren einer Einrichtungsfunktion (61) für Netzwerkautomatisierungsfunktionen, wobei die Einrichtungsfunktion mit einer Verwaltungsdomäne (62a) eines Netzwerkverwaltungssystems eines mobilen Kommunikationsnetzwerks verknüpft ist, wobei die Verwaltungsdomäne eine oder mehrere Netzwerkautomatisierungsfunktionen (63a) umfasst, und wobei die Verwaltungsdomäne mit einer spezifischen Ebene einer Verwaltungsdomänenhierarchie des Netzwerkverwaltungssystems verknüpft ist, wobei das Verfahren Folgendes umfasst:
Speichern von ersten Informationen, die Beschreibungen und Betriebsprofile von einer oder mehreren ersten Netzwerkautomatisierungsfunktionen (66b) von einer oder mehreren ersten Verwaltungsdomänen (65b) des Netzwerkverwaltungssystems anzeigen, wobei die ersten Verwaltungsdomänen mit einer Ebene L-1 der Verwaltungsdomänenhierarchie verknüpft sind;
Speichern von zweiten Informationen, die ein Verwaltungsdomänenwissen über eine oder mehrere zweite Verwaltungsdomänen (62a) des Netzwerkverwaltungssystems, wobei die zweiten Verwaltungsdomänen mit einer Ebene L der Verwaltungsdomänenhierarchie verknüpft sind, die höher ist als die Ebene L-1, und über die eine oder die mehreren ersten Verwaltungsdomänen anzeigen;
Erfassen (S701) von dritten Informationen, die eine Beschreibung einer dritten Netzwerkautomatisierungsfunktion (64) anzeigen, die in einer Verwaltungsdomäne (65a) der ersten Verwaltungsdomänen, die mit der Ebene L-1 verknüpft sind, einzurichten ist;
Durchführen (S703) einer Beurteilung der dritten Informationen gegenüber mindestens einem der ersten Informationen und der zweiten Informationen;
Bestimmen (S705) eines Betriebsprofils der dritten Netzwerkautomatisierungsfunktion auf Basis der Beurteilung; und
Einrichten (S707) der dritten Netzwerkautomatisierungsfunktion in der ersten Verwaltungsdomäne, die mit der Ebene L-1 verknüpft ist, durch Anwenden des Betriebsprofils auf die dritte Netzwerkautomatisierungsfunktion, wobei die Verwaltungsdomäne, mit der die Einrichtungsfunktion verknüpft ist, eine der zweiten Verwaltungsdomänen ist, die mit der Ebene L verknüpft sind, und wobei das Verfahren von der Einrichtungsfunktion für Netzwerkautomatisierungsfunktionen, die mit der zweiten Verwaltungsdomäne verknüpft sind, durchgeführt wird.

2. Nichttransitorisches computerlesbares Speichermedium, auf dem ein Programm gespeichert ist, das, wenn es von einem Computer ausgeführt wird, den Computer veranlasst, ein Verfahren zum Implementieren einer Einrichtungsfunktion (61) für Netzwerkautomatisierungsfunktionen durchzuführen, wobei die Einrichtungsfunktion mit einer Verwaltungsdomäne (62a) eines Netzwerkverwaltungssystems eines mobilen Kommunikationsnetzwerks verknüpft ist, wobei die Verwaltungsdomäne eine oder mehrere Netzwerkautomatisierungsfunktionen (63a) umfasst, und wobei die Verwaltungsdomäne mit einer spezifischen Ebene einer Verwaltungsdomänenhierarchie des Netzwerkverwaltungssystems verknüpft ist, wobei das Verfahren Folgendes umfasst:
Speichern von ersten Informationen, die Beschreibungen und Betriebsprofile von einer oder mehreren ersten Netzwerkautomatisierungsfunktionen (66b) von einer oder mehreren ersten Verwaltungsdomänen (65b) des Netzwerkverwaltungssystems anzeigen, wobei die ersten Verwaltungsdomänen mit einer Ebene L-1 der Verwaltungsdomänenhierarchie verknüpft sind;
Speichern von zweiten Informationen, die ein Verwaltungsdomänenwissen über eine oder mehrere zweite Verwaltungsdomänen (62a) des Netzwerkverwaltungssystems, wobei die zweiten Verwaltungsdomänen mit einer Ebene L der Verwaltungsdomänenhierarchie verknüpft sind, die höher ist als die Ebene L-1, und über die eine oder die mehreren ersten Verwaltungsdomänen anzeigen;
Erfassen (S701) von dritten Informationen, die eine Beschreibung einer dritten Netzwerkautomatisierungsfunktion (64) anzeigen, die in einer Verwaltungsdomäne (65a) der ersten Verwaltungsdomänen, die mit der Ebene L-1 verknüpft sind, einzurichten ist;
Durchführen (S703) einer Beurteilung der dritten Informationen gegenüber mindestens einem der ersten Informationen und der zweiten Informationen;
Bestimmen (S705) eines Betriebsprofils der dritten Netzwerkautomatisierungsfunktion auf Basis der Beurteilung; und
Einrichten (S707) der dritten Netzwerkautomatisierungsfunktion in der ersten Verwaltungsdomäne, die mit der Ebene L-1 verknüpft ist, durch Anwenden des Betriebsprofils auf die dritte Netzwerkautomatisierungsfunktion, wobei die Verwaltungsdomäne, mit der die Einrichtungsfunktion verknüpft ist, eine der zweiten Verwaltungsdomänen ist, die mit der Ebene L verknüpft sind, und wobei das Verfahren von der Einrichtungsfunktion für Netzwerkautomatisierungsfunktionen, die mit der zweiten Verwaltungsdomäne verknüpft sind, durchgeführt wird.

3. Vorrichtung zum Implementieren einer Einrichtungsfunktion (61) für Netzwerkautomatisierungsfunktionen, wobei die Einrichtungsfunktion mit einer Verwaltungsdomäne (62a) eines Netzwerkverwaltungssystems eines mobilen Kommunikationsnetzwerks verknüpft ist, wobei die Verwaltungsdomäne eine oder mehrere Netzwerkautomatisierungsfunktionen (63a) umfasst und wobei die Verwaltungsdomäne mit einer spezifischen Ebene einer Verwaltungsdomänenhierarchie des Netzwerkverwaltungssystems verknüpft ist, wobei die Vorrichtung mindestens einen Prozessor und mindestens einen Speicher umfasst, der Computerprogrammcode beinhaltet, wobei der mindestens eine Speicher und der Computerprogrammcode dazu ausgelegt sind, die Vorrichtung mit dem mindestens einen Prozessor zu veranlassen, mindestens Folgendes durchzuführen:
Speichern von ersten Informationen, die Beschreibungen und Betriebsprofile von einer oder mehreren ersten Netzwerkautomatisierungsfunktionen (66b) von einer oder mehreren ersten Verwaltungsdomänen (65b) des Netzwerkverwaltungssystems anzeigen, wobei die ersten Verwaltungsdomänen mit einer Ebene L-1 der Verwaltungsdomänenhierarchie verknüpft sind;
Speichern von zweiten Informationen, die ein Verwaltungsdomänenwissen über eine oder mehrere zweite Verwaltungsdomänen (62a) des Netzwerkverwaltungssystems, wobei die zweiten Verwaltungsdomänen mit einer Ebene L der Verwaltungsdomänenhierarchie verknüpft sind, die höher ist als die Ebene L-1, und über die eine oder die mehreren ersten Verwaltungsdomänen anzeigen;
Erfassen von dritten Informationen, die eine Beschreibung einer dritten Netzwerkautomatisierungsfunktion (64) anzeigen, die in einer Verwaltungsdomäne (65a) der ersten Verwaltungsdomänen, die mit der Ebene L-1 verknüpft sind, einzurichten ist;
Durchführen einer Beurteilung der dritten Informationen gegenüber mindestens einem der ersten Informationen und der zweiten Informationen;
Bestimmen eines Betriebsprofils der dritten Netzwerkautomatisierungsfunktion auf Basis der Beurteilung; und
Einrichten der dritten Netzwerkautomatisierungsfunktion in der ersten Verwaltungsdomäne, die mit der Ebene L-1 verknüpft ist, durch Anwenden des Betriebsprofils auf die dritte Netzwerkautomatisierungsfunktion, wobei die Verwaltungsdomäne, mit der die Einrichtungsfunktion verknüpft ist, eine der zweiten Verwaltungsdomänen ist, die mit der Ebene L verknüpft sind, und wobei das Verfahren von der Einrichtungsfunktion für Netzwerkautomatisierungsfunktionen, die mit der zweiten Verwaltungsdomäne verknüpft sind, durchgeführt wird.

4. Vorrichtung nach Anspruch 3, wobei die Beschreibungen der einen oder der mehreren ersten Netzwerkautomatisierungsfunktionen und die Beschreibung der dritten Netzwerkautomatisierungsfunktion mindestens eines von Folgendem umfassen:
ein qualitatives Ziel der ersten Netzwerkautomatisierungsfunktionen;
ein qualitatives Ziel der dritten Netzwerkautomatisierungsfunktion;
eine Anzeige dazu, welche Metrik von den ersten Netzwerkautomatisierungsfunktionen zu optimieren ist;
eine Anzeige dazu, welche Metrik von der dritten Netzwerkautomatisierungsfunktion zu optimieren ist;
einen Satz von möglichen Eingaben der ersten Netzwerkautomatisierungsfunktionen;
einen Satz von möglichen Eingaben der dritten Netzwerkautomatisierungsfunktion;
einen Satz von möglichen Ausgaben der ersten Netzwerkautomatisierungsfunktionen;
einen Satz von möglichen Ausgaben der dritten Netzwerkautomatisierungsfunktion;
einen oder mehrere Algorithmen der ersten Netzwerkautomatisierungsfunktionen;
einen oder mehrere Algorithmen der dritten Netzwerkautomatisierungsfunktion;
Regelsätze der Algorithmen;
einen oder mehrere Maschinenlernalgorithmen der Algorithmen;
eine Art von Netzwerkressourcen, die von den ersten Netzwerkautomatisierungsfunktionen manipuliert werden; und
eine Art von Netzwerkressourcen, die von der dritten Netzwerkautomatisierungsfunktion manipuliert werden,
wobei die Art mindestens eines von einem Satz von Zellen des mobilen Kommunikationsnetzwerks oder eines Sliceunternetzes des mobilen Kommunikationsnetzwerks umfasst.

5. Vorrichtung nach einem der Ansprüche 3 bis 4, wobei die zweiten Informationen mindestens eines von Netzwerkverkehrsbedingungen und Alarmen umfassen.

6. Vorrichtung nach einem der Ansprüche 3 bis 5, wobei die Betriebsprofile der ersten Netzwerkautomatisierungsfunktionen mindestens eines von Folgendem umfassen:
ein quantitatives Ziel der ersten Netzwerkautomatisierungsfunktionen;
tatsächlich verfügbare Eingabedatenquellen und Netzwerkparameter;
tatsächlich erforderliche Eingabedatenquellen und Netzwerkparameter;
einen oder mehrere tatsächliche Algorithmen der ersten Netzwerkautomatisierungsfunktionen;
eine Auslegung der tatsächlichen Algorithmen;
einen Betriebsumfang der ersten Netzwerkautomatisierungsfunktionen;
Instanzen von Netzwerkressourcen in einer spezifischen Verwaltungsdomäne der ersten Verwaltungsdomänen; und
einen Satz von Zellkennungen in einer spezifischen Verwaltungsdomäne der ersten Verwaltungsdomänen.

7. Vorrichtung nach einem der Ansprüche 3 bis 6, wobei der mindestens eine Speicher und der Computerprogrammcode dazu ausgelegt sind, mit dem mindestens einen Prozessor die Vorrichtung zu veranlassen, Folgendes durchzuführen:
Erfassen der dritten Informationen via eine erste Steuerungs- und Expositionsschnittstelle zwischen der Einrichtungsfunktion und der dritten Netzwerkautomatisierungsfunktion.

8. Vorrichtung nach einem der Ansprüche 3 bis 7, wobei der mindestens eine Speicher und der Computerprogrammcode dazu ausgelegt sind, mit dem mindestens einen Prozessor die Vorrichtung zu veranlassen, Folgendes durchzuführen:
Anwenden des Betriebsprofils via eine erste Steuerungs- und Expositionsschnittstelle zwischen der Einrichtungsfunktion und der dritten Netzwerkautomatisierungsfunktion auf die dritte Netzwerkautomatisierungsfunktion.

9. Vorrichtung nach einem der Ansprüche 3 bis 8, wobei der mindestens eine Speicher und der Computerprogrammcode dazu ausgelegt sind, mit dem mindestens einen Prozessor die Vorrichtung zu veranlassen, Folgendes durchzuführen:
Erfassen der zweiten Informationen via mindestens eine zweite Schnittstelle zwischen der Einrichtungsfunktion und einer oder mehreren der ersten und der zweiten Verwaltungsdomäne; und
Erfassen der ersten Informationen via mindestens eine dritte Steuerungs- und Expositionsschnittstelle zwischen der Einrichtungsfunktion und den ersten Netzwerkautomatisierungsfunktionen.

10. Vorrichtung nach Anspruch 9, wobei
die mindestens eine zweite Schnittstelle mindestens eine zweite Steuerungs- und Expositionsschnittstelle zwischen der Einrichtungsfunktion und einer oder mehreren zweiten Netzwerkautomatisierungsfunktionen umfasst, die mit den zweiten Verwaltungsdomänen verknüpft sind, und
die zweiten Netzwerkautomatisierungsfunktionen mindestens eine zweite Netzwerkautomatisierungsfunktion beinhalten, die für eine Betriebsauslegung mindestens einer der ersten Netzwerkautomatisierungsfunktionen verantwortlich ist.

11. Vorrichtung nach einem der Ansprüche 3 bis 10, wobei der mindestens eine Speicher und der Computerprogrammcode dazu ausgelegt sind, mit dem mindestens einen Prozessor die Vorrichtung zu veranlassen, Folgendes durchzuführen:
Empfangen einer Bedienereingabe zum Steuern der Einrichtungsfunktion via eine vierte Steuerungs- und Expositionsschnittstelle der Einrichtungsfunktion.

12. Vorrichtung nach einem der Ansprüche 3 bis 11, wobei der mindestens eine Speicher und der Computerprogrammcode dazu ausgelegt sind, mit dem mindestens einen Prozessor die Vorrichtung zu veranlassen, ferner Folgendes durchzuführen:
Bereitstellen des Betriebsprofils für mindestens eine von zweiten Netzwerkautomatisierungsfunktionen der zweiten Verwaltungsdomänen, die für eine Betriebsauslegung der dritten Netzwerkautomatisierungsfunktionen verantwortlich ist.

13. Vorrichtung nach einem der Ansprüche 3 bis 12, wobei mindestens eines von Folgendem gilt:
die erste und die zweite Verwaltungsdomäne entsprechen einer dienstbasierten Verwaltungsarchitektur;
die ersten Netzwerkautomatisierungsfunktionen und die dritte Netzwerkautomatisierungsfunktion repräsentieren Netzwerkfunktionsverwaltungsfunktionen und zweite Netzwerkautomatisierungsfunktionen der zweiten Verwaltungsdomänen repräsentieren Netzwerksliceunternetzverwaltungsfunktionen;
die ersten Netzwerkautomatisierungsfunktionen und die dritte Netzwerkautomatisierungsfunktion repräsentieren Netzwerksliceunternetzverwaltungsfunktion und eine zweite Netzwerkautomatisierungsfunktion der zweiten Verwaltungsdomäne repräsentiert eine Netzwerksliceverwaltungsfunktion;
die Einrichtungsfunktion ist mit einer zweiten Verwaltungsdomäne der zweiten Verwaltungsdomänen verknüpft, die mit einem Funkzugangsnetzwerk des mobilen Kommunikationsnetzwerks verknüpft ist, und die dritte Netzwerkautomatisierungsfunktion in einer ersten Verwaltungsdomäne der ersten Verwaltungsdomänen einzurichten ist, die mit dem Funkzugangsnetzwerk verknüpft ist;
die Einrichtungsfunktion ist mit einer zweiten Verwaltungsdomäne der zweiten Verwaltungsdomänen verknüpft, die mit einem Kernnetzwerk des mobilen Kommunikationsnetzwerks verknüpft ist, und die dritte Netzwerkautomatisierungsfunktion in einer ersten Verwaltungsdomäne der ersten Verwaltungsdomänen einzurichten ist, die mit dem Kernnetzwerk verknüpft ist;
die ersten, die zweiten und die dritten Netzwerkautomatisierungsfunktionen repräsentieren geschlossene Schleifen;
die zweiten Informationen werden von einer Betriebsphase der ersten und der zweiten Netzwerkautomatisierungsfunktionen abgeleitet;
die Beschreibungen der einen oder der mehreren ersten Netzwerkautomatisierungsfunktionen und die Beschreibung der dritten Netzwerkautomatisierungsfunktion sind von einem Deskriptor abgeleitet, der für eine Instanziierung der geschlossenen Schleifen verwendet wird; und
das Betriebsprofil wird auf eine Inbetriebnahmephase der dritten Netzwerkautomatisierungsfunktionen angewendet.

## Revendications

1. Procédé de mise en œuvre d'une fonction de paramétrage (61) pour des fonctions d'automatisation de réseau, dans lequel la fonction de paramétrage est associée à un domaine de gestion (62a) d'un système de gestion de réseau d'un réseau de communications mobiles, dans lequel le domaine de gestion comprend une ou plusieurs fonctions d'automatisation de réseau (63a), et dans lequel le domaine de gestion est associé à un niveau spécifique d'une hiérarchie de domaines de gestion du système de gestion de réseau, le procédé comprenant :
le stockage de premières informations indiquant des descriptions et des profils opérationnels d'une ou plusieurs premières fonctions d'automatisation de réseau (66b) d'un ou plusieurs premiers domaines de gestion (65b) du système de gestion de réseau, dans lequel les premiers domaines de gestion sont associés à un niveau L-1 de la hiérarchie de domaines de gestion ;
le stockage de deuxièmes informations indiquant une connaissance de domaine de gestion concernant un ou plusieurs deuxièmes domaines de gestion (62a) du système de gestion de réseau, dans lequel les deuxièmes domaines de gestion sont associés à un niveau L de la hiérarchie de domaines de gestion qui est supérieur au niveau L-1, et concernant les un ou plusieurs premiers domaines de gestion ;
l'acquisition (S701) de troisièmes informations indiquant une description d'une troisième fonction d'automatisation de réseau (64) qui doit être mise en place dans un domaine de gestion (65a) des premiers domaines de gestion associés au niveau L-1 ;
la réalisation (S703) d'une évaluation des troisièmes informations par rapport aux premières informations et/ou aux deuxièmes informations ;
la détermination (S705) d'un profil opérationnel de la troisième fonction d'automatisation de réseau sur la base de l'évaluation ; et
le paramétrage (S707) de la troisième fonction d'automatisation de réseau dans le premier domaine de gestion associé au niveau L-1 en appliquant le profil opérationnel à la troisième fonction d'automatisation de réseau, dans lequel le domaine de gestion auquel la fonction de paramétrage est associée est l'un des deuxièmes domaines de gestion associés au niveau L, et dans lequel le procédé est effectué par la fonction de paramétrage pour des fonctions d'automatisation de réseau associées au deuxième domaine de gestion.

2. Support de stockage non transitoire lisible par ordinateur stockant un programme qui, lorsqu'il est exécuté par un ordinateur, amène l'ordinateur à effectuer un procédé de mise en œuvre d'une fonction de paramétrage (61) pour des fonctions d'automatisation de réseau, dans lequel la fonction de paramétrage est associée à un domaine de gestion (62a) d'un système de gestion de réseau d'un réseau de communications mobiles, dans lequel le domaine de gestion comprend une ou plusieurs fonctions d'automatisation de réseau (63a), et dans lequel le domaine de gestion est associé à un niveau spécifique d'une hiérarchie de domaines de gestion du système de gestion de réseau, le procédé comprenant :
le stockage de premières informations indiquant des descriptions et des profils opérationnels d'une ou plusieurs premières fonctions d'automatisation de réseau (66b) d'un ou plusieurs premiers domaines de gestion (65b) du système de gestion de réseau, dans lequel les premiers domaines de gestion sont associés à un niveau L-1 de la hiérarchie de domaines de gestion ;
le stockage de deuxièmes informations indiquant une connaissance de domaine de gestion concernant un ou plusieurs deuxièmes domaines de gestion (62a) du système de gestion de réseau, dans lequel les deuxièmes domaines de gestion sont associés à un niveau L de la hiérarchie de domaines de gestion qui est supérieur au niveau L-1, et concernant les un ou plusieurs premiers domaines de gestion ;
l'acquisition (S701) de troisièmes informations indiquant une description d'une troisième fonction d'automatisation de réseau (64) qui doit être mise en place dans un domaine de gestion (65a) des premiers domaines de gestion associés au niveau L-1 ;
la réalisation (S703) d'une évaluation des troisièmes informations par rapport aux premières informations et/ou aux deuxièmes informations ;
la détermination (S705) d'un profil opérationnel de la troisième fonction d'automatisation de réseau sur la base de l'évaluation ; et
le paramétrage (S707) de la troisième fonction d'automatisation de réseau dans le premier domaine de gestion associé au niveau L-1 en appliquant le profil opérationnel à la troisième fonction d'automatisation de réseau, dans lequel le domaine de gestion auquel la fonction de paramétrage est associée est l'un des deuxièmes domaines de gestion associés au niveau L, et dans lequel le procédé est effectué par la fonction de paramétrage pour des fonctions d'automatisation de réseau associées au deuxième domaine de gestion.

3. Appareil pour la mise en œuvre d'une fonction de paramétrage (61) pour des fonctions d'automatisation de réseau, dans lequel la fonction de paramétrage est associée à un domaine de gestion (62a) d'un système de gestion de réseau d'un réseau de communications mobiles, dans lequel le domaine de gestion comprend une ou plusieurs fonctions d'automatisation de réseau (63a), et dans lequel le domaine de gestion est associé à un niveau spécifique d'une hiérarchie de domaines de gestion du système de gestion de réseau, l'appareil comprenant au moins un processeur et au moins une mémoire comportant un code de programme informatique, l'au moins une mémoire et le code de programme informatique étant configurés pour, avec l'au moins un processeur, amener l'appareil à au moins effectuer ce qui suit :
le stockage de premières informations indiquant des descriptions et des profils opérationnels d'une ou plusieurs premières fonctions d'automatisation de réseau (66b) d'un ou plusieurs premiers domaines de gestion (65b) du système de gestion de réseau, dans lequel les premiers domaines de gestion sont associés à un niveau L-1 de la hiérarchie de domaines de gestion ;
le stockage de deuxièmes informations indiquant une connaissance de domaine de gestion concernant un ou plusieurs deuxièmes domaines de gestion (62a) du système de gestion de réseau, dans lequel les deuxièmes domaines de gestion sont associés à un niveau L de la hiérarchie de domaines de gestion qui est supérieur au niveau L-1, et concernant les un ou plusieurs premiers domaines de gestion ;
l'acquisition de troisièmes informations indiquant une description d'une troisième fonction d'automatisation de réseau (64) qui doit être mise en place dans un domaine de gestion (65a) des premiers domaines de gestion associés au niveau L-1 ;
la réalisation d'une évaluation des troisièmes informations par rapport aux premières informations et/ou aux deuxièmes informations ;
la détermination d'un profil opérationnel de la troisième fonction d'automatisation de réseau sur la base de l'évaluation ; et
le paramétrage de la troisième fonction d'automatisation de réseau dans le premier domaine de gestion associé au niveau L-1 en appliquant le profil opérationnel à la troisième fonction d'automatisation de réseau, dans lequel le domaine de gestion auquel la fonction de paramétrage est associée est l'un des deuxièmes domaines de gestion associés au niveau L, et dans lequel le procédé est effectué par la fonction de paramétrage pour des fonctions d'automatisation de réseau associées au deuxième domaine de gestion.

4. Appareil selon la revendication 3, dans lequel les descriptions des une ou plusieurs premières fonctions d'automatisation de réseau et la description de la troisième fonction d'automatisation de réseau comprennent au moins l'un des éléments suivants :
un objectif qualitatif des premières fonctions d'automatisation de réseau ;
un objectif qualitatif de la troisième fonction d'automatisation de réseau ;
une indication de la mesure à optimiser par les premières fonctions d'automatisation de réseau ;
une indication de la mesure à optimiser par la troisième fonction d'automatisation de réseau ;
un ensemble d'entrées possibles des premières fonctions d'automatisation de réseau ;
un ensemble d'entrées possibles de la troisième fonction d'automatisation de réseau ;
un ensemble de sorties possibles des premières fonctions d'automatisation de réseau ;
un ensemble de sorties possibles de la troisième fonction d'automatisation de réseau ;
un ou plusieurs algorithmes des premières fonctions d'automatisation de réseau ;
un ou plusieurs algorithmes de la troisième fonction d'automatisation de réseau ;
des ensembles de règles des algorithmes ;
un ou plusieurs algorithmes d'apprentissage machine des algorithmes ;
un type de ressources réseau qui sont manipulées par les premières fonctions d'automatisation de réseau ; et
un type de ressources réseau qui sont manipulées par la troisième fonction d'automatisation de réseau,
dans lequel le type comprend au moins un parmi un ensemble de cellules du réseau de communications mobiles ou un sous-réseau de tranches du réseau de communications mobiles.

5. Appareil selon l'une des revendications 3 et 4, dans lequel les deuxièmes informations comprennent au moins une parmi des conditions de trafic de réseau et des alarmes.

6. Appareil selon l'une des revendications 3 à 5, dans lequel les profils opérationnels des premières fonctions d'automatisation de réseau comprennent au moins l'un des éléments suivants :
un objectif quantitatif des premières fonctions d'automatisation de réseau ;
des sources de données d'entrée et des paramètres de réseau réels disponibles ;
des sources de données d'entrée et des paramètres de réseau réels nécessaires ;
un ou plusieurs algorithmes réels des premières fonctions d'automatisation de réseau ;
une configuration des algorithmes réels ;
une portée opérationnelle des premières fonctions d'automatisation de réseau ;
des instances de ressources réseau dans un domaine de gestion spécifique des premiers domaines de gestion ; et
un ensemble d'identifiants de cellules dans un domaine de gestion spécifique des premiers domaines de gestion.

7. Appareil selon l'une des revendications 3 à 6, dans lequel l'au moins une mémoire et le code de programme informatique sont configuré pour, avec l'au moins un processeur, amener l'appareil à effectuer en outre :
l'acquisition des troisièmes informations via une première interface de contrôle et d'exposition entre la fonction de paramétrage et la troisième fonction d'automatisation de réseau.

8. Appareil selon l'une des revendications 3 à 7, dans lequel l'au moins une mémoire et le code de programme informatique sont configuré pour, avec l'au moins un processeur, amener l'appareil à effectuer en outre :
l'application du profil opérationnel à la troisième fonction d'automatisation de réseau via une première interface de contrôle et d'exposition entre la fonction de paramétrage et la troisième fonction d'automatisation de réseau.

9. Appareil selon l'une des revendications 3 à 8, dans lequel l'au moins une mémoire et le code de programme informatique sont configuré pour, avec l'au moins un processeur, amener l'appareil à effectuer en outre :
l'acquisition des deuxièmes informations via au moins une deuxième interface entre la fonction de paramétrage et un ou plusieurs des premier et deuxièmes domaines de gestion ; et
l'acquisition des premières informations via au moins une troisième interface de contrôle et d'exposition entre la fonction de paramétrage et les premières fonctions d'automatisation de réseau.

10. Appareil selon la revendication 9, dans lequel
l'au moins une deuxième interface comprend au moins une deuxième interface de contrôle et d'exposition entre la fonction de paramétrage et une ou plusieurs deuxièmes fonctions d'automatisation de réseau associées aux deuxièmes domaines de gestion, et
les deuxièmes fonctions d'automatisation de réseau comportent au moins une deuxième fonction d'automatisation de réseau qui est responsable d'une configuration opérationnelle d'au moins une des premières fonctions d'automatisation de réseau.

11. Appareil selon l'une des revendications 3 à 10, dans lequel l'au moins une mémoire et le code de programme informatique sont configuré pour, avec l'au moins un processeur, amener l'appareil à effectuer en outre :
la réception d'une entrée d'opérateur pour contrôler la fonction de paramétrage via une quatrième interface de contrôle et d'exposition de la fonction de paramétrage.

12. Appareil selon l'une des revendications 3 à 11, dans lequel l'au moins une mémoire et le code de programme informatique sont configuré pour, avec l'au moins un processeur, amener l'appareil à effectuer en outre :
la fourniture d'au moins une des deuxièmes fonctions d'automatisation de réseau du deuxièmes domaines de gestion, qui est responsable d'une configuration opérationnelle de la troisième fonction d'automatisation de réseau avec le profil opérationnel.

13. Appareil selon l'une des revendications 3 à 12, dans lequel l'un des cas suivants s'applique :
les premier et deuxième domaines de gestion correspondent à une architecture de gestion basée sur les services ;
les premières fonctions d'automatisation de réseau et la troisième fonction d'automatisation de réseau représentent des fonctions de gestion de fonction de réseau, et les deuxièmes fonctions d'automatisation de réseau des deuxièmes domaines de gestion représentent des fonctions de gestion de sous-réseau de tranches de réseau ;
les premières fonctions d'automatisation de réseau et la troisième fonction d'automatisation de réseau représentent des fonctions de gestion de sous-réseau de tranches de réseau, et une deuxième fonction d'automatisation de réseau du deuxième domaine de gestion représente une fonction de gestion de tranches de réseau ;
la fonction de paramétrage est associée à un deuxième domaine de gestion des deuxièmes domaines de gestion qui est associé à un réseau d'accès radio du réseau de communications mobiles, et la troisième fonction d'automatisation de réseau doit être paramétrée dans un premier domaine de gestion des premiers domaines de gestion qui est associé au réseau d'accès radio ;
la fonction de paramétrage est associée à un deuxième domaine de gestion des deuxièmes domaines de gestion qui est associé à un réseau central du réseau de communications mobiles, et la troisième fonction d'automatisation de réseau doit être paramétrée dans un premier domaine de gestion des premiers domaines de gestion qui est associé au réseau central ;
les première, deuxième et troisième fonctions d'automatisation de réseau représentent des boucles fermées ;
les deuxièmes informations sont dérivées à partir d'une phase d'exploitation des première et deuxièmes fonctions d'automatisation de réseau ;
les descriptions des une ou plusieurs premières fonctions d'automatisation de réseau et la description de la troisième fonction d'automatisation de réseau sont dérivées à partir d'un descripteur utilisé pour l'instanciation des boucles fermées ; et
le profil opérationnel est appliqué à une phase de mise en service de la troisième fonction d'automatisation de réseau.
